# EUROPEAN PATENT APPLICATION

(11) **EP 4 822 511 A1**
(43) Date of publication of application: **14.10.2026**
(21) Application number: 26169216.4
(22) Date of filing: 30.03.2026
(51) Int. Cl.: G06F 3/14

(54) **DISPLAY METHOD, DISPLAY DEVICE, STORAGE MEDIUM AND PROGRAM PRODUCT**

(30) Priority: 07.04.2025 CN 202510429827
(71) Applicant: Xiaomi EV Technology Co., Ltd., Beijing 100176 (CN)
(72) Inventor: YUE, Qiqi, Beijing, 100176 (CN); BAO, Xiehao, Beijing, 100176 (CN); WANG, Jianzhou, Beijing, 100176 (CN)
(74) Representative: Stöckeler, Ferdinand

(57) **Abstract**

The present invention relates to a display method, includes: obtaining (S21) an instruction for displaying a target image spanning at least two display areas with a first spacing between the at least two display areas; and displaying (S22) respectively at least two sub-images of the target image that correspond to locations of the at least two display areas on the at least two display areas, in which the at least two sub-images do not overlap in the target image, and a second spacing corresponding to the first spacing exists between the at least two sub-images.

## Description

### FIELD

The present invention relates to the field of multi-screen display technologies, and in particular relates to a display method, a display device, a storage medium and a program product.

### BACKGROUND

With the development of vehicle technology, an interaction mode of a multi-screen display system will be more intelligent and diversified. A user may more conveniently control a screen display and a vehicle function through a voice command, a gesture operation and the like, improving driving safety and convenience.

### SUMMARY

In the multi-screen display system, due to a physical reason, in a case where multiple display areas or multiple display screens are spliced together, physical spacings exist between edges of the display areas or edges of the screens, and the physical spacing does not display a content. Therefore, the physical spacing affects the continuity of the visual effect and easily causes the user to feel fragmented. In order to solve the problems in the related art, the present invention provides a display method, a display device, a storage medium and a program product.

According to a first aspect of the present invention, there is provided a display method, including:
obtaining an instruction for displaying a target image spanning at least two display areas with a first spacing between the at least two display areas; and
displaying respectively at least two sub-images of the target image that correspond to locations of the at least two display areas on the at least two display areas, in which the at least two sub-images do not overlap in the target image, and a second spacing corresponding to the first spacing exists between the at least two sub-images.

Optionally, a display area among the at least two display areas includes a display area of a physical screen.

Optionally, a display area among the at least two display areas includes a display area formed by a projection onto a front windshield of a vehicle performed by a projection device.

Optionally, the at least two display areas are arranged horizontally.

Optionally, the method further includes: obtaining an image data of the target image; rendering, according to the image data, the target image on a virtual display screen, in which the virtual display screen includes at least two first areas and a second area located between the at least two display areas, the at least two first areas are in a one-to-one correspondence to the at least two display areas, and the second area corresponds to the first spacing; dividing, according to size information of the at least two first areas and the second area, the target image into at least two first sub-images and at least one second sub-image, in which the second sub-image is an image corresponding to the second spacing; and displaying respectively the at least two sub-images of the target image that correspond to the locations of the at least two display areas on the at least two display areas includes: displaying the at least two first sub-images on the at least two display areas.

Optionally, displaying the at least two first sub-images on the at least two display areas includes: displaying, for a first area among the at least two first areas, the first sub-image on the first area on a display area corresponding to the first area.

Optionally, the second area has a size the same as a size of the first spacing.

Optionally, the at least two display areas are arranged along a preset direction, and the at least two first areas are arranged in the same manner as the at least two display areas on the virtual display screen.

Optionally, the target image includes a first target element spanning the at least two first areas on the virtual display screen, and the method further includes: adjusting, according to a size of the first target element in the preset direction, a size of the second area located between the at least two first areas to arrange the first target element within the second area adjusted.

Optionally, the target image includes a second target element having a size larger than a size of the second area in the preset direction, and rendering, according to the image data, the target image on the virtual display screen pre-constructed includes: downsizing, for a second target element, an element part located within the second area in the second target element, in which the element part includes a part consisting of pixel points located within the second area among pixel points constituting the second target element.

Optionally, downsizing the element part located within the second area includes: downsizing the element part located within the second area according to a preset ratio, in which the preset ratio is smaller than or equal to a ratio threshold, and the ratio threshold is a ratio of the size of the second area to the size of the second target element in the preset direction.

Optionally, displaying respectively the at least two sub-images of the target image that correspond to the locations of the at least two display areas on the at least two display areas includes: for a display area among the at least two display areas, determining a mask image of an edge area of the display area, performing a superposition processing on a first image part and the mask image to obtain a second image part, generating a third sub-image corresponding to the display area according to the second image part and a third image part, and displaying the third sub-image in the display area, in which the first image part is an image part located in the edge area among the sub-images corresponding to the display area, and the third image part is an image part not located in the edge area among the sub-images corresponding to the display area.

Optionally, displaying respectively the at least two sub-images of the target image that correspond to the locations of the at least two display areas on the at least two display areas further includes: performing a blur processing on a fourth image part to obtain a fifth image part, in which the fourth image part is an image part located in a first edge area among the sub-images corresponding to the display area, and the first edge area is an edge area at a side adjacent to the first spacing in the display area; and generating the third sub-image corresponding to the display area according to the second image part and the third image part includes: generating the third sub-image corresponding to the display area according to the second image part, the third image part, the fifth image part and a sixth image part, in which the sixth image part is an image part not located in the first edge area among the sub-images corresponding to the display area.

Optionally, respectively displaying the at least two sub-images of the target image that correspond to the locations of the at least two display areas on the at least two display areas further includes: for a display area among the at least two display areas, performing a blur processing on a fourth image part to obtain a fifth image part, generating a fourth sub-image corresponding to the display area according to a fifth image part and a sixth image part, and displaying the fourth sub-image in the display area, in which the fourth image part is an image part located in a first edge area among the sub-images corresponding to the display area, the sixth image part is an image part not located in the first edge area among the sub-images corresponding to the display area, and the first edge area is an edge area at a side adjacent to the first spacing in the display area.

According to a second aspect of the present invention, there is provided a display device, including:
a first obtaining module configured to obtain an instruction for displaying a target image spanning at least two display areas with a first spacing between the at least two display areas; and
a displaying module configured to display respectively at least two sub-images of the target image that correspond to locations of the at least two display areas on the at least two display areas, in which the at least two sub-images do not overlap in the target image, and a second spacing corresponding to the first spacing exists between the at least two sub-images.

According to a third aspect of the present invention, there is provided a computer-readable storage medium having a computer program stored thereon, in which the computer program, when executed by a processor, implements the display method according to the first aspect of the embodiments of the present invention.

According to a fourth aspect of the present invention, there is provided a computer program product including a computer program, in which the computer program, when executed by a processor, implements the display method according to the first aspect of the embodiments of the present invention.

According to the present invention, in a case where the first spacing exists between the at least two display areas that need to display images synchronously, the second spacing corresponding to the first spacing exists between the at least two sub-images displayed in the at least two display areas, such that the at least two sub-images displayed in the at least two display areas with the first spacing existing between the at least two sub-images are discontinuous, but the second spacing corresponding to the first spacing exists between the at least two sub-images. Therefore, a non-fragmentation effect may be achieved in a case where an image is displayed across a screen, and the viewing effect of a user is further improved.

It is to be understood that both the foregoing general description and the following detailed description are exemplary and explanatory, and are not construed to limit the present invention.

### BRIEF DESCRIPTION OF DRAWINGS

The accompanying drawings, which are incorporated in and constitute a part of this specification, illustrate embodiments in line with the present invention and, together with the description, serve to explain the principle of the present invention.
FIG. 1 is a schematic diagram illustrating a multi-screen display according to an exemplary embodiment.
FIG. 2 is a flow chart illustrating a display method according to an exemplary embodiment.
FIG. 3 is a schematic diagram illustrating multiple display areas and a first spacing according to an exemplary embodiment.
FIG. 4 is a schematic diagram illustrating another multi-screen display according to an exemplary embodiment.
FIG. 5 is a schematic diagram illustrating a virtual display screen according to an exemplary embodiment.
FIG. 6A is a schematic diagram illustrating another multi-screen display according to an exemplary embodiment.
FIG. 6B is a schematic diagram illustrating another multi-screen display according to an exemplary embodiment.
FIG. 7A is a schematic diagram illustrating another multi-screen display according to an exemplary embodiment.
FIG. 7B is a schematic diagram illustrating another multi-screen display according to an exemplary embodiment.
FIG. 8 is a block diagram illustrating a display device according to an exemplary embodiment.
FIG. 9 is a block diagram illustrating a vehicle according to an exemplary embodiment.
FIG. 10 is a block diagram illustrating a mobile terminal according to an exemplary embodiment.

### DETAILED DESCRIPTION

Embodiments will be described in detail herein, examples of which are illustrated in the accompanying drawings. The following description refers to the accompanying drawings in which the same reference numerals in different drawings represent the same or similar elements unless otherwise represented. The implementations set forth in the following description of the embodiments do not represent all implementations in line with the present invention. Instead, they are merely examples of devices and methods in line with aspects related to the present invention as recited in the appended claims.

It is to be noted that all actions for obtaining a signal, information, or data in the present invention are performed on the premise of complying with the corresponding data protection laws and policies of the local country and obtaining authorization from the corresponding device owner.

In the multi-screen display system, due to a physical reason, in a case where multiple display areas or multiple display screens are spliced together, physical spacings exist between edges of the display areas or edges of the screens, and the physical spacing does not display a content. Therefore, the physical spacing affects the continuity of the visual effect and easily causes the user to feel fragmented.

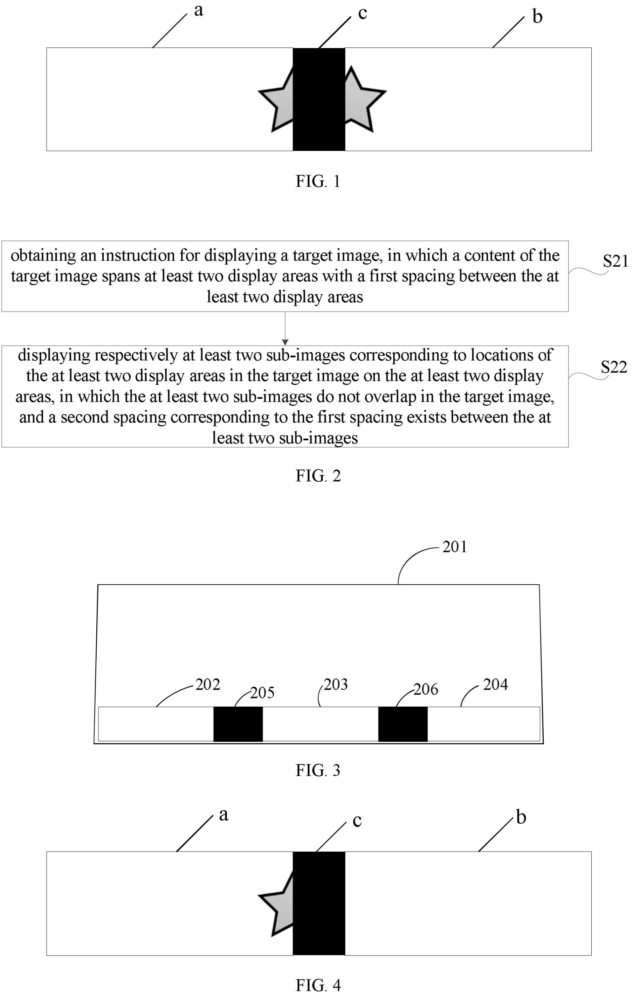

As described in the background art, in a multi-screen display system, physical spacings exist between edges of the display areas or edges of the screens, which affects the continuity of the visual effect. FIG. 1 is a schematic diagram of a multi-screen display according to an exemplary embodiment. As shown in FIG. 1, in a case where an image is synchronously displayed in a display area a and a display area b, since there is a spacing c (e.g. a black area in FIG. 1) between two adjacent display areas, and an element (e.g. a five-pointed star in FIG. 1) is displayed in the display area a and the display area b synchronously, a crack may occur (for example, in FIG. 1, a left part of the five-pointed star is displayed in the display area a and a right part is displayed in the display area b), thus affecting the display effect of the image, and easily causing the user to feel fragmented, resulting in poor user experience.

Accordingly, the present invention provides a display method, a display device, an electronic device, a storage medium and a program product. A target image includes at least two sub-images displayed in at least two display areas, a second spacing exists between the at least two sub-images in target image, and the second spacing corresponds to a first spacing between the at least two display areas. In this way, the user's feeling of fragmentation in a case of displaying the target image across screens may be avoided, and the viewing effect of the user may be improved.

FIG. 2 is a flow chart illustrating a display method according to an exemplary embodiment. As shown in FIG. 2, the display method may include the following steps.

In step S21, an instruction for displaying a target image is obtained, in which a content of the target image spans at least two display areas with a first spacing between the at least two display areas.

The target image may be a still image or an animated frame image. For example, the target image may be an animation frame image in a power-on animation, and the instruction for displaying the target image may be an instruction generated according to a detected power-on operation. For another example, the target image may be a navigation image, and the instruction for displaying the target image may be an instruction for initiating a navigation.

In embodiments of the present invention, the target image may be an image that needs synchronous display of multiple display areas. That is, the content of the target image spans the at least two display areas with the first spacing between the at least two display areas, and the first spacing does not display the image. Further, the sub-images displayed in each of the at least two display areas are different parts in the target image.

The content of the target image spanning the at least two display areas means that the target image covers all or some of the at least two display areas and the first spacing between the at least two display areas. That is, the target image includes respective sub-images displayed in each of the at least two display areas and all or some of the sub-images corresponding to the first spacing between the at least two display areas.

In an embodiment, the display area may include a display area of a physical screen, for example, an instrument panel in a vehicle, a central control panel and the like. In a case where at least two physical screens are spliced together, respective display areas of the at least two physical screens have a first spacing between them, and the first spacing is a border of the physical screens.

In another embodiment, the display area includes a display area formed by a projection onto a front windshield of a vehicle performed by a projection device. That is, at least two projection devices are included in the vehicle, and each projection device projects onto the front windshield of the vehicle, respectively, to form one or more display areas extending from one side to the other side of the front windshield. The projection device may be, for example, an optical machine, a projector and the like.

For example, as shown in FIG. 3, three projection devices may be included in the vehicle, and the three projection devices respectively project toward a left position, a middle position, and a right position below a front windshield 201 to form three display areas. A left display area is hereinafter referred to as a first display area 202, a middle display area is hereinafter referred to as a second display area 203, and a right display area is hereinafter referred to as a third display area 204.

In embodiments of the present invention, multiple display areas are arranged horizontally, for example, three display areas are arranged horizontally as shown in FIG. 3. However, in other embodiments, the at least two display areas may be arranged longitudinally, for example, arranged on the front windshield along an A-pillar, which is not limited in the present invention.

For example, it is assumed that a target image needs to be synchronously displayed in the first display area 202 and the second display area 203, the content of the target image needs to span the first display area 202 and the second display area 203, and there is a first spacing 205 between the first display area 202 and the second display area 203 (a black area in the first display area 202 and the second display area 203 in FIG. 3). In this example, the content of the target image includes sub-images displayed on the first display area 202 and the second display area 203, respectively, and some or all of the sub-images corresponding to the first spacing 205.

For another example, it is assumed that the target image needs to be synchronously displayed in the first display area 202, the second display area 203, and the third display area 204, and the first spacing 205 (a black area in the first display area 202 and the second display area 203 in FIG. 3) exists between the first display area 202 and the second display area 203, and a first spacing 206 (the second display area 203 and the third display area 204 in FIG. 3) exists between the second display area 203 and the third display area 204. In this example, the content of the target image includes respective sub-images displayed on each of the first display area 202, the second display area 203, and the third display area 204, some or all of the sub-images corresponding to the first spacing 205, and some or all of the sub-images corresponding to the first spacing 206.

In step S22, at least two sub-images corresponding to locations of the at least two display areas are displayed respectively in the target image on the at least two display areas, in which the at least two sub-images do not overlap in the target image, and a second spacing corresponding to the first spacing exists between the at least two sub-images.

For example, it is assumed that the target image needs to be synchronously displayed in the first display area 202, the second display area 203, and the third display area 204, a sub-image corresponding to a location of the first display area 202 in the target image is displayed on the first display area 202, and a sub-image corresponding to a location of the second display area 203 in the target image is displayed on the second display area 203. The two sub-images do not overlap in the target image, the two sub-images are not adjacent to each other, and the second spacing corresponding to the first spacing exists between the at least two sub-images.

For another example, it is assumed that the target image needs to be synchronously displayed in the first display area 202, the second display area 203, and the third display area 204, the sub-image corresponding to the location of the first display area 202 in the target image is displayed on the first display area 202, the sub-image corresponding to the location of the second display area 203 in the target image is displayed on the second display area 203, and a sub-image corresponding to a location of the third display area 204 in the target image is displayed on the third display area 204. The second spacing corresponding to the first spacing 205 exists between the sub-image corresponding to the first display area 202 and the sub-image corresponding to the second display area 203, and the second spacing corresponding to the first spacing 206 exists between the sub-image corresponding to the second display area 203 and the sub-image corresponding to the third display area 204.

FIG. 4 is a schematic diagram illustrating another multi-screen display according to an exemplary embodiment. As shown in FIG. 4, in a case where an image displayed synchronously in a display area a and a display area b, since a second spacing exists between at least two sub-images corresponding to at least two display areas, the display area b delays a display element (a five-pointed star), and the schematic diagram of the multi-screen display shown in FIG. 4 is obtained. In this way, the user's feeling of fragmentation in a case of displaying the target image across screens may be avoided, and the viewing effect of the user may be improved.

In the present invention, it is considered that a first spacing exists between at least two display areas that need to display the target image synchronously, and thus the second spacing corresponding to the first spacing exists between the at least two sub-images displayed in the at least two display areas. In this way, the at least two sub-images displayed in the at least two display areas are discontinuous, but the second spacing corresponding to the first spacing exists. Therefore, the user may be prevented from feeling fragmented in a case of displaying the target image across the screen, thus realizing the display effect of images without fragmentation, and improving the viewing effect of the user.

According to the embodiments of the present invention, in a case where the first spacing exists between the at least two display areas that need to display the target image synchronously, the second spacing corresponding to the first spacing exists between the at least two sub-images displayed in the at least two display areas. In this way, the at least two sub-images displayed in the at least two display areas are discontinuous, but the second spacing corresponding to the first spacing exists. Therefore, the user may be prevented from feeling fragmented in a case of displaying the target image across the screen, thus realizing the display effect of images without fragmentation, and improving the viewing effect of the user.

It is to be understood that in the present invention, the second area has a size the same as or different from a size of the first spacing, which is not limited in the present invention.

In an embodiment, the method may further include:
obtaining an image data of the target image;
rendering, according to the image data, the target image on a virtual display screen pre-constructed, in which the virtual display screen includes at least two first areas and a second area located between the at least two display areas, the at least two first areas are in a one-to-one correspondence to the at least two display areas, and the second area corresponds to the first spacing; and
dividing, according to size information of the at least two first areas and the second area, the target image into at least two first sub-images and at least one second sub-image, in which the second sub-image is an image at the second spacing.

For example, a business layer unit may receive an operation instruction from a user interaction layer and state information fed back by a vehicle control system, and further determine a target image of multi-screen synchronous display. After obtaining the image data of the target image, the business layer unit renders the target image on the virtual display screen pre-constructed. For example, the business layer unit delivers the image data of the target image to the virtual display screen for rendering. A management unit of the virtual display screen may uniformly manage and coordinate image data from different services or the same service and accurately and efficiently distribute the image data to different display areas, such that a cooperative work of multiple screens in the vehicle is realized, and the visual experience of a user is improved. Furthermore, the management unit of the virtual display screen is used for managing the creation and destruction of the virtual display screen.

In a case where the target image is rendered on the virtual display screen, the virtual display screen uniformly generates a vertical synchronization signal (VSync), such that all areas in the virtual display screen are ensured to be refreshed in the same vertical synchronization period, and the tearing of the image is avoided.

In the present invention, the virtual display screen may be created according to a display area that needs to be displayed synchronously and a first spacing between two adjacent display areas. For example, the display areas that needs to be displayed synchronously include the first display area 202, the second display area 203 and the third display area 204. In an embodiment, a size of the created virtual display screen is the sum of sizes of the first display area 202, the second display area 203 and the third display area 204, and sizes of the first spacing 205 and the second spacing. Here, the size refers to the size in pixels.

For example, it is assumed that a height of the display area that needs to be displayed synchronously is fixed. In a case where the size of the first display area 202 is W1*H, the size of the second display area 203 is W2*H, the size of the third display area 204 is W3*H, the size of the first spacing 205 is K1*H, and the size of the first spacing 206 is K2*H, if the three display areas and the first spacing are arranged horizontally, the size of the created virtual display screen may be (W1+K1+W2+K2+W3)*H.

An upper left corner of the virtual display screen is taken as an origin of a rectangular coordinate system, a horizontal right is a positive direction of an x-axis, and a vertical downward is a positive direction of a y-axis. For example, a standard of representing 1 pixel per unit length is followed in both the positive direction of the x-axis and the positive direction of the y-axis.

In order to clearly distinguish and manage different physical screens, a unique identifier of display area ID is introduced. The identifier ensures that the system may accurately identify, call and control the corresponding screens during interaction between software and hardware of the system. For example, an identifier of the first display area 202 is ID = 1, an identifier of the second display area 203 is ID = 2, and an identifier of the third display area 204 is ID = 3. It is assumed that an upper left corner coordinate of the first area corresponding to the first display area 202 is (x1, y1) and a lower right corner coordinate is (x2, y2), the first area corresponding to the first display area 202 is: an abscissa range is from x1 to x2, and an ordinate range is from y1 to y2.

For example, the display area includes the first display area 202, the second display area 203, and the third display area 204. A width of the virtual display screen is Wvd pixels and a height is Hvd pixels. The width of each display area is Wps and the height is Hps, and Wvd=3Wvd+2G, where G represents a width of each first spacing, and Hvd is greater than or equal to Hps. It is assumed that a first area corresponding to the third display area 204 is located in the lower right corner of the virtual display screen, an abscissa of the upper left corner of the first area corresponding to the third display area 204 in the virtual display screen is Xstart=Wvd-Wps, and an ordinate is Ystart=Hvd-Hps. That is, the coordinates of the upper left corner and the lower right corner of the first area corresponding to the third display area 204 in the virtual display screen are (Xstart, Ystart) and (Wvd, Hvd).

Similarly, for each first area, a coordinate range of the first area in the virtual display screen may be determined according to the size information of the first area and its orientation in the virtual display screen. For each second area, a coordinate range of the second area in the virtual display screen may be determined according to the size information of the second area. The orientation of the first area in the virtual display screen refers to the left, middle or right side in the virtual screen.

After that, the target image rendered in the virtual display screen may be divided into multiple first sub-images and second sub-images according to the coordinate range of each first area and each second area in the virtual display screen. The first sub-image refers to an image located in the first area, that is, the coordinate range of the first sub-image in the target image is consistent with the coordinate range of the first area corresponding to the first sub-image. The second sub-image refers to an image located at the second spacing, that is, the second sub-image is an image located in the second area, and the second sub-image is not displayed in the display area or in the first spacing between two adjacent display areas.

In the present invention, a user's operation on a target display area is detected, and the target display area is one of the multiple display areas. According to this operation, a first sub-image displayed on a first area corresponding to the target display area is processed to obtain a processed first sub-image, and the processed first sub-image is displayed in the target display area.

Following the above example, in a case where the user clicks a zoom-in control at a center of the third display area 204, coordinates of a center position in the virtual display screen are (Xvd, Yvd), where Xvd=Xstart+(Wps/2) and Yvd= Ystart+(Hps/2). The management unit of the virtual display screen may detect that the zoom-in control with a position coordinate of (Xvd, Yvd) in the virtual display screen is triggered, and according to this operation, the sub-image in the third display area 204 corresponding to the first area is zoomed in, and the zoomed-in sub-image is displayed.

It is to be understood that a number and layout of simultaneously displayed display areas are not fixed, which may be flexibly adjusted through software configuration. For example, in a case where a space is limited, the number of display areas may be reduced, and a content displayed in the virtual display screen may be compressed in proportion to display in a smaller number of display areas. Optionally, in a case where it is needed to focus on displaying a certain part of the content, the arrangement of the display area is changed, such as corner type, surround type and the like to meet diversified display and usage scenarios.

Correspondingly, displaying respectively the at least two sub-images corresponding to the locations of the at least two display areas in the target image on the at least two display areas includes:
displaying the at least two first sub-images on the at least two display areas.

For example, for each area, the first sub-image on the first area is displayed on the display area corresponding to the first area.

In the present invention, the at least two display areas are arranged along a preset direction, and the first spacing refers to a spacing between the at least two display areas in the preset direction. For example, the preset direction may be a horizontal direction, such as the horizontal direction of the front windshield, arranged from left to right, or arranged from right to left.

Correspondingly, the at least two first areas are arranged in the same manner as the at least two display areas on the virtual display screen. Moreover, the second areas are in a one-to-one correspondence to the first spacings on the virtual display screen.

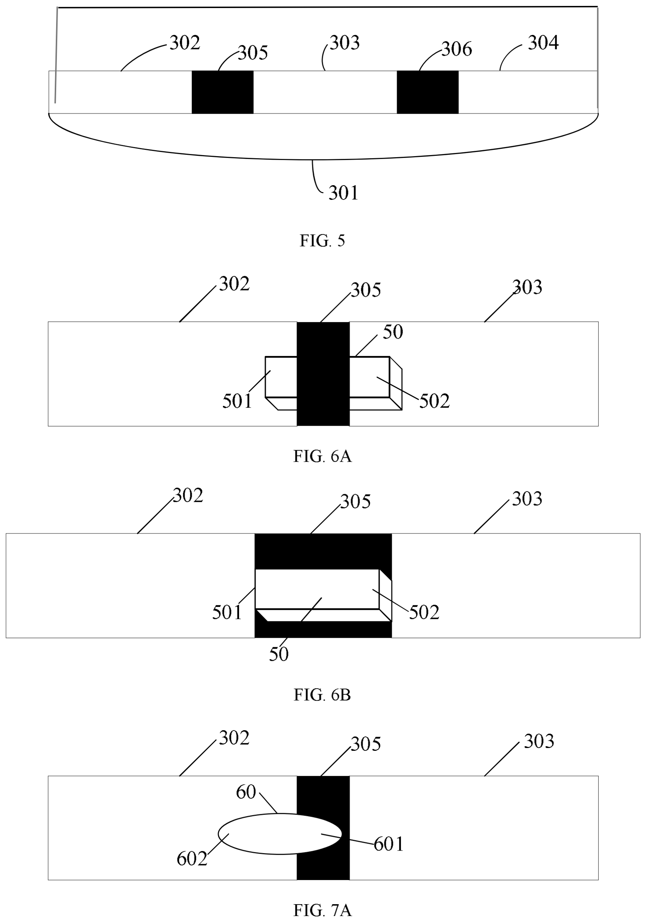

For example, it is assumed that the display area displayed synchronously is as shown in FIG. 3, and correspondingly, a virtual display screen created according to the display area shown in FIG. 3 is as shown in FIG. 5. In FIG. 5, a virtual display screen 301 may include a first area 302 corresponding to the first display area 202, a first area 303 corresponding to the second display area 203, a first area 304 corresponding to the third display area 204, a second area 305 corresponding to the first spacing 205 and a second area 306 corresponding to the first spacing 206. In FIG. 5, the first area and the second area are arranged in the same manner as multiple display areas and spacings.

In order to facilitate understanding, the following description takes the target image as an animation frame image as an example. The target image includes an animation element, and the animation element refers to an element that changes in an animation, such as a position, size, shape, color and the like. Further, the first animation frame may also include a static element, which refers to an element that remains unchanged in the animation and is typically used to provide background or environmental information to provide a parameter for a motion of the animation element.

For example, a target position of a pixel point constituting the animation element in the virtual display screen may be determined by the following formula (1):
$x \left(t\right) = {x}_{0} + \left({x}_{1}-{x}_{0}\right) * f \left(\frac{t}{T}\right)$ (1)
where *x(t)* represents the target position of the pixel point in the horizontal direction on the virtual display screen, *x*₀ represents an initial position of the pixel point in the horizontal direction in the animation, that is, a position of the pixel point in the horizontal direction on the virtual display screen in the first animation frame in the animation, *x*₁ represents a position of the pixel point in the horizontal direction on the virtual display screen in a last animation frame in the animation, that is, at the end of the animation playback, *t* represents a current time, *T* represents a total duration of first animation playback, and $f \left(\frac{t}{T}\right)$ represents an interpolation function. The interpolation function may be a temporal interpolation function, a Bézier curve interpolation function and the like.

According to the above formula (1), a target position of each pixel point constituting the animation element on the virtual display screen may be determined.

It is assumed that the display area has a width of W and a height of H, the spacing has a width of G and a height of H, and a number of the display areas is N, the width of the virtual display screen is *Wᵥᵢᵣₜᵤₐₗ=N*W+*(*N-*1)**G.* In a case where the multiple first areas are arranged in the same manner as the multiple display areas, the coordinate range of the first area corresponding to the k^{th} display area in the horizontal direction is Ω*ₖ=*[(*k-*1)(*W+G*),(*k-*1)(*W+G*)*+W*], a value range of k is [1, N], and a coordinate range of the second area corresponding to the j^{th} spacing in the horizontal direction is *βⱼ*=[*jW+*(*j-*1)*G,j*(*W+G*)], and a value range of j is [1, N-1].

For example, in a case where a time at which the animation element first appears in the first display area is ${t}_{1}^{start}$, a time at which the animation element first appears in the k^{th} display area is determined to be ${t}_{k}^{start} = {t}_{1}^{start} + Δ {t}_{k}$ according to a moving speed v (in pixels/second) of the animation element, where $Δ {t}_{k} = \frac{\left(k-1\right) \left(W+G\right)}{ν}$. That is, the k^{th} display area displays the animation element after a delay Δ*tₖ* with respect to the first display area.

In this way, in the present invention, the second spacing corresponding to the first spacing exists between the at least two sub-images displayed in the at least two display areas, such that a display area located after the second spacing may be delayed to display the animation element. Furthermore, the fragmentation of animation element is avoided, the non-fragmentation display effect of the image is implemented, and the viewing effect of the user is improved.

In an embodiment, the second area has a size the same as a size of the first spacing. Since the size of the first spacing is usually fixed, the size of the second area corresponding to the first spacing on the virtual display screen is also fixed. However, it is considered that a size of an element in the target image is large in the preset direction, for example, the size of the element in the horizontal direction is large, which may occur that the element spans at least two first areas on the virtual display screen.

For example, referring to FIG. 6A, it is assumed that a first target element is a cuboid 50, which is located in the first area 302, the second area 305 and the first area 303 simultaneously. At this time, in a case where the first sub-image on the first area 302 is displayed in the first display area 202 and the first sub-image on the first area 303 is displayed in the second display area 203, the first display area 202 will display a left partial image 501 of the cuboid 50 and the second display area 203 will display a right partial image 502 of the cuboid 50. In this way, a part of the first target element is displayed in the display area corresponding to the at least two first areas simultaneously, resulting in the picture to be fragmented.

In order to avoid the fragmentation of the picture, in another embodiment, the size of the second area on the virtual display screen is adjusted in the preset direction, that is, the second area has thee size different from the size of the first spacing. For example, in a case where the first spacing is unchanged, the second area may be adjusted according to the size of the element in the target image in the preset direction.

Optionally, the target image includes a first target element spanning the at least two first areas on the virtual display screen, and the method further includes:
adjusting, according to a size of the first target element in the preset direction, a size of the second area located between the at least two first areas to arrange the first target element within the second area adjusted.

According to the size of the first target element in the preset direction, the size of the second area located between the at least two first areas may be adjusted to be greater than or equal to the size of the first target element in the preset direction.

It is to be understood that sizes of respective elements in the target image in the preset direction may be determined according to the image data of the target image.

For example, referring to FIG. 6A, it is assumed that a size of the cuboid 50 is L, a size of the second area 305 in the horizontal direction may be increased to L, and the result shown in FIG. 6B may be obtained. In FIG. 6B, the cuboid 50 is completely located in the adjusted second area 305. In this way, in a case where the first sub-image on the first area 302 is displayed in the first display area 202 and the first sub-image on the first area 303 is displayed in the second display area 203, an image of the cuboid 50 is not displayed in the first display area 202 and the second display area 203, thus avoiding a feeling of fragmentation to the user.

By adopting the above technical solution, the size of the second area on the virtual display screen may be adjusted according to the requirements, such that the flexibility of multi-screen display is improved, and the feeling of fragmentation to the user is further avoided.

In an embodiment, the target image includes a second target element having a size larger than a size of the second area in the preset direction, and rendering, according to the image data, the target image on the virtual display screen pre-constructed includes: downsizing, for each of the second target elements, an element part located within the second area in the second target element, in which the element part includes a part consisting of pixel points located within the second area among pixel points constituting the second target element.

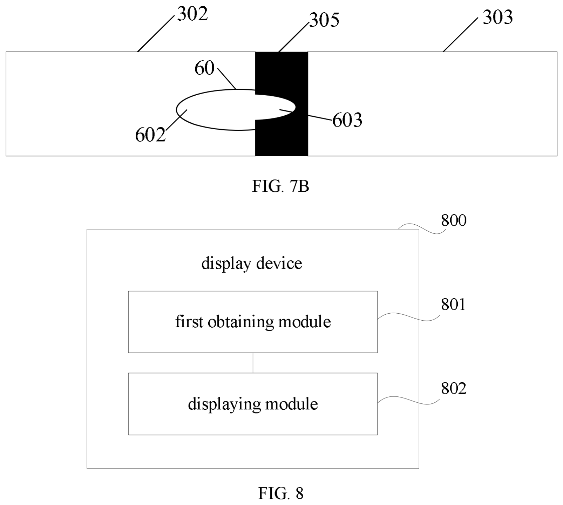

FIG. 7A is a schematic diagram illustrating another multi-screen display according to an exemplary embodiment. As shown in FIG. 7A, a second target element is an ellipse 60, and the ellipse 60 has a size in a horizontal direction larger than that of a second area 305. In order to reduce a probability that the ellipse 60 is located within the second area 305 and a first area 302 or a first area 303 simultaneously, in the present embodiment, during a rendering process, a first image part 601 of the ellipse 60 located in the second area in the ellipse 60 may be downsized to obtain a third image part 603, and a second image part 602 of the ellipse 60 may not be downsized to obtain the schematic diagram of the multi-screen display shown in FIG. 7B, such that the first area 303 may display the complete second target element more quickly.

It is to be understood that since the element located within the second area will not be displayed in the display area, downsizing the element part located in the second area will not cause distortion of the displayed picture and will not affect the viewing experience of the user.

In the present embodiment, the element part located within the second area is downsized according to a preset ratio, in which the preset ratio is smaller than or equal to a ratio threshold, and the ratio threshold is a ratio of the size of the second area to the size of the second target element in the preset direction.

The smaller the preset ratio, the longer the second target element stays in the second area, and correspondingly, the longer a delay time for displaying the second target element in the first area on a right side of the second area, which affects the viewing experience of the user. Therefore, preferably, the preset ratio is equal to the ratio of the size of the second area to the size of the second target element in the preset direction.

By adopting the above technical solution, a duration for displaying the complete element in the display area is increased, and the viewing experience of the user is further improved.

Furthermore, in an embodiment of the present invention, in order to improve the display effect of the animation, a halo effect may also be added at an edge of the image. In the present embodiment, displaying respectively the at least two sub-images corresponding to the locations of the at least two display areas in the target image on the at least two display areas includes:
for each of the display areas, determining a mask image of an edge area of the display area, performing a superposition processing on a first image part and the mask image to obtain a second image part, generating a third sub-image corresponding to the display area according to the second image part and a third image part, and displaying the third sub-image in the display area, in which the first image part is an image part located in the edge area among the sub-images corresponding to the display area, and the third image part is an image part not located in the edge area among the sub-images corresponding to the display area.

The edge area may be left and right edge areas of the display area, or may be upper and lower edge areas. It is considered that multiple display areas are arranged horizontally, in order to enhance the effect of displaying the animation across the screen, it is preferable that the edge areas may be left and right edge areas of the display area.

For example, the edge area is determined according to a preset halo initial position and a preset halo spread range. In the mask image of the edge area, a halo intensity of the pixel point decays exponentially in a direction from the halo initial position to a direction away from the halo initial position. That is, in the mask image, the halo intensity of the pixel point changes gradually in the direction from the halo initial position to the direction away from the halo initial position.

For example, in a case where a position of the halo initial position in the horizontal direction is 0 and a halo diffusion range is 0.1W, coordinates of the edge area in the horizontal direction are (0, 0.1W).

In a possible implementation, the mask image of the edge area in the display area may be generated by a Gaussian kernel function for achieving an edge halo effect. Its core idea is to define a brightness or a color gradient area of the halo at the left and right edges (or the upper and lower edges) of the display area, and control an attenuation range and smoothness of the halo through a Gaussian function.

The Gaussian kernel function is shown in formula (2):
$M \left(x\right) = {e}^{\frac{- {\left(x-μ\right)}^{2}}{2 {δ}^{2}}}$ (2)\
where *M(x)* represents a mask intensity of a pixel point at a horizontal coordinate X, and its value range is [0,1], and *µ* represents a center position of the Gaussian function, that is, the halo initial position, which is usually 0 or W.

If *µ*=0, the halo starts to attenuate from the left edge of the display area. If *µ=W*, the halo starts to attenuate from the right edge of the display area. In a case where it is needed that the halos exist in the left and right edge areas, mask images of *µ*=0 and *µ=W* are calculated respectively, that is, the mask image of the left edge area and the mask image of the right edge area are calculated respectively, and then the two mask images are superimposed.

*δ* represents a standard deviation of the Gaussian function and controls the halo diffusion range, that is, a decay speed of the halo from an edge to a center of the screen. The halo diffusion range refers to a range in the horizontal direction. For example, *δ=*0.1*W*, in which the larger *δ* is, the wider a halo coverage range (a wider gradient area), and the smaller *δ* is, the more the halo is concentrated at the edge (steeper attenuation). For example, in a case where a width of the display area is W=1920 pixels and *δ*=192 pixels, the halo covers about 3*δ*=576 pixels (30% of a width of the screen).

If x=*µ*, *M(x)=*1 (the halo intensity is maximum and is located at a starting point of the edge). If x is far away from *µ*, *M(x)* decays exponentially, and the decay speed is controlled by *δ.*

After the mask image of the edge area is obtained in the above-described manner, the superposition processing is performed on the first image part of the sub-image located in the edge area and the second image part of the mask image. For example, the superposition processing may be a color blending process. For example, the mask intensity *M(x)* is combined with a halo color (e.g., blue) to achieve a gradient effect to obtain the second image part. In the second image part, for a pixel point with the horizontal position x, the mixed color = original color × (1-M(x)) + halo color *M(x).*

After the second image part is obtained, the second image part and the third image part are spliced to obtain a third sub-image corresponding to the display area. For example, it is assumed that the edge area of the display area includes a left edge area and a right edge area, a mask image of the left edge area and a mask image of the right edge area are determined respectively, and then the superposition processing is performed on the first image part located in the left edge area and the mask image of the left edge area to obtain a second image part located in the left edge area, the superposition processing is performed on the first image part located in the right edge area and the mask image of the right edge area to obtain a second image portion located in the right edge area, and then the second image part located in the left edge area, the third image part and the second image part located in the right edge area in a left-to-right order to obtain a third sub-image corresponding to the display area, and the third sub-image is displayed in the display area.

In order to further enhance the animation effect, a motion blur may further be added to an image part located within the first edge area near the first spacing.

In another embodiment of the present invention, both the halo and motion blur may be added to the image part. Optionally, displaying respectively the at least two sub-images corresponding to the locations of the at least two display areas in the target image on the at least two display areas further includes:
performing a blur processing on a fourth image part to obtain a fifth image part, in which the fourth image part is an image part located in a first edge area among the sub-images corresponding to the display area, and the first edge area is an edge area at a side adjacent to the first spacing in the display area.

Correspondingly, generating the third sub-image corresponding to the display area according to the second image part and the third image part includes:

generating the third sub-image corresponding to the display area according to the second image part, the third image part, the fifth image part and the sixth image part, in which the sixth image part is an image part not located in the first edge area among the sub-images corresponding to the display area.

For example, the blur processing is shown in Formula (3):
${I}_{blur} \left(x, t\right) = \frac{1}{T} {\int }_{t - T}^{t} I \left(x-ντ,τ\right) dτ$ (3)
where *I_{blur}*(*x,t*) represents a pixel intensity (for example, the pixel intensity may be a color value) of a pixel point whose horizontal position is x at a time t, and its value range is consistent with that of an original image, for example, the value range is [0,255], or the value range is normalized [0,1]. (*x*-*ντ*,*τ*) represents an original pixel intensity of a pixel point whose horizontal position is x*-ντ* at a time *τ*. ν represents a moving speed of the pixel point. *x*-*ντ* represents a speed *ν*. A location of the time *τ* is shifted in an opposite direction, and a motion trajectory is compensated. τ represents an integral variable with the value range from t-T to t. T=G/*ν* represents an integration time window, which indicates a duration of the blur, and may be dynamically adjusted by the speed *ν* and a blur gain G.

The fourth image part is processed according to the above blur processing method to obtain the fifth image part, and then the third sub-image corresponding to the display area is generated according to the second image part, the third image part, the fifth image part and the sixth image part. For example, it is assumed that the fourth image part is located at the right edge of the display area, the superposition processing is performed on the second image part and the fifth image part located at the right edge area to obtain a seventh image part, then the second image part, the third image part and the seventh image part located at the left edge area are sequentially spliced from left to right to obtain the third sub-image, and finally the third sub-image is displayed in the display area.

In yet another embodiment of the present invention, respectively displaying the at least two sub-images corresponding to the locations of the at least two display areas in the target image on the at least two display areas further includes:

for each of the display areas, performing a blur processing on a fourth image part to obtain a fifth image part, generating a fourth sub-image corresponding to the display area according to a fifth image part and a sixth image part, and displaying the fourth sub-image in the display area, in which the fourth image part is an image part located in a first edge area among the sub-images corresponding to the display area, the sixth image part is an image part not located in the first edge area among the sub-images corresponding to the display area, and the first edge area is an edge area at a side adjacent to the first spacing in the display area.

The specific method of the blur processing has been described in the previous embodiment, and will not be repeated here.

It is considered that a distortion may be exist in a case where the sub-image is formed by a projection onto the display area for display by a projection device. For example, in a case where the display area is a display area formed by the projection onto a front windshield performed by the projection device, since the front windshield has a certain curvature, the projection device may be distorted in a case where the sub-image is formed by the projection onto the display area. That is, the sub-image displayed on the display area has a certain distortion with respect to the sub-image on the virtual display screen, thus resulting in image distortion and affecting the display effect.

In view of the above problems, in an embodiment of the present invention, the method may further include:
obtaining an anti-distortion image of a display device including at least two projection devices;
performing an anti-distortion processing on the target image according to the anti-distortion image; and
displaying respectively at least two sub-images corresponding to locations of the at least two display areas in the target image after the anti-distortion processing on the at least two display areas.

In an implementation, an implementation for obtaining the anti-distortion image of the display device is as follows: projecting a preset orientation image in a display area by the display device, and a size of the orientation image is determined according to a size of all display areas projected by the projection device; photographing the display area at a driving location to obtain a distorted image of the orientation image; and determining the anti-distortion image of the projection device according to the orientation image and the distorted image.

It is to be understood that in a case where multiple display areas are arranged in a preset direction with a first spacing between two adjacent display areas, a size of the orientation image is determined according to all display areas and all the first spacings. For example, if a number of display areas is 3 and a number of first spacings is 2, a width of the orientation image=3*W+2*G. The orientation image may be rendered by a program.

In another implementation, an implementation for obtaining the anti-distortion image of the display device is as follows: obtaining an environmental parameter and an equipment parameter of the display device; and generating the anti-distortion image of the display device according to the environmental parameter, the equipment parameter and a preset image generation model.

In this implementation, the anti-distortion image of the display device may be obtained by machine learning. For example, after the display device is used for a period of time, it will affect the aging of optical elements, changes in temperature and environment, changes in mechanical structure, changes in the performance of electronic elements and the like, resulting in the failure of an original anti-distortion image. Therefore, it is needed to regenerate a new anti-distortion image according to the current environmental parameter and equipment parameter of the display device.

The following describes a training process of the image generation model.

Training sample data is collected. The training sample data may include optical element aging data. Image data of optical elements of display devices with different service life and models, and the corresponding element parameter change information, such as the refractive index change of the lens and the reflectivity change of the mirror are collected. The training sample data may further include temperature and environmental data. The image data of the display device under different environmental conditions such as temperature, humidity and vibration is recorded, and corresponding environmental parameters, such as temperature value, humidity value, vibration amplitude and frequency are collected. The training sample data may further include mechanical structure change data. The image data of a mechanical structure of the display device in different degrees of looseness and deformation, as well as the changes of related structural parameters, such as the displacement and angle changes of the mounting bracket is obtained. The training sample data may further include electronic component performance data. The image data of the electronic components of the display device in different use time and working conditions, as well as the performance parameters of the components, such as pixel brightness of a display screen, voltage and current changes of a driving circuit and the like is collected.

The training sample data is preprocessed. For example, noise, outliers and duplicate data in data are removed to improve the quality and accuracy of data. For another example, the collected image data is marked, and the type and degree of distortion in the image, as well as the corresponding influencing factors, such as optical element aging, temperature change and the like are marked. For another example, data of different types and ranges are normalized to make the data have the same scale and distribution, which is convenient for subsequent training and analysis.

A model is selected and built. According to the characteristics of data and training objectives, suitable deep learning models, such as a convolutional neural network (CNN) and a recurrent neural network (RNN) are selected. According to the type of the selected model, an appropriate model structure is designed, including the setting of parameters such as a number of network layers, a number of neurons and a size of convolution kernel.

The model is trained. The training sample data is divided into a training set and a validation set. The training set is used to train the model and the validation set is used to evaluate the performance of the model and adjust parameters of the model. Before training, the parameters, such as learning rate, batch size, iteration times and the like, for training the model are determined. During the training process, the training set is used to train the model, and the parameters of the model are constantly adjusted by the back propagation algorithm to minimize the loss function of the model and improve the accuracy and generalization ability of the model.

The model is evaluated and refined. The validation set is used to evaluate the trained image generation model, calculate the accuracy, recall and mean square error of the image generation model, and evaluate the performance and anti-distortion effect of the image generation model. For example, according to the evaluation results, parameters of the image generation model are adjusted and refined, such as increasing the number of network layers and adjusting the learning rate, thus further improving the performance of the model.

In addition, with the use of the display device and the change of the environment, new data may be continuously collected to update and improved the image generation model, such that the image generation model may adapt to the current display device to obtain more accurate anti-distortion images.

After the trained image generation model is obtained in the above way, the image generation model may be deployed in the cloud to generate the anti-distortion image of the display device in the cloud and then distributed to the vehicle, or the image generation model may be directly deployed on the vehicle side, which is not limited in the present invention.

The environmental parameters of the display device may be the temperature and environmental data described above. The equipment parameters may be the aging data of optical components, mechanical structure change data and electronic component performance data described above. The environmental parameters and equipment parameters are input into the image generation model to obtain the anti-distortion image of the display device output by the image generation model.

By adopting the above technical solution, before dividing a first animation frame into multiple sub-images, the anti-distortion processing is performed on the first animation frame, thus further improving the display effect of the animation.

Based on the same inventive concept, the present invention provides a display device. FIG. 8 is a block diagram illustrating a display device according to an exemplary embodiment. Referring to FIG. 8, the display device 800 may include:
a first obtaining module 801 configured to obtain an instruction for displaying a target image, in which a content of the target image spans at least two display areas with a first spacing between the at least two display areas; and
a displaying module 802 configured to display respectively at least two sub-images corresponding to locations of the at least two display areas in the target image on the at least two display areas, in which the at least two sub-images do not overlap in the target image, and a second spacing corresponding to the first spacing exists between the at least two sub-images.

Optionally, the display area includes a display area of a physical screen.

Optionally, the display area includes a display area formed by a projection onto a front windshield of a vehicle performed by a projection device.

Optionally, the at least two display areas are arranged horizontally.

Optionally, the display device 800 may further include:
a second obtaining module configured to obtain an image data of the target image;
a rendering module configured to render, according to the image data, the target image on a virtual display screen pre-constructed, in which the virtual display screen includes at least two first areas and a second area located between the at least two display areas, the at least two first areas are in a one-to-one correspondence to the at least two display areas, and the second area corresponds to the first spacing;
a dividing module configured to divide, according to size information of the at least two first areas and the second area, the target image into at least two first sub-images and at least one second sub-image, in which the second sub-image is an image at the second spacing; and
the displaying module 802 is further configured to display the at least two first sub-images on the at least two display areas.

Optionally, the displaying module 802 is further configured to display, for each of the first areas, the first sub-image on the first area on a display area corresponding to the first area.

Optionally, the second area has a size the same as a size of the first spacing.

Optionally, the at least two display areas are arranged along a preset direction, and the at least two first areas are arranged in the same manner as the at least two display areas on the virtual display screen.

Optionally, the target image includes a first target element spanning the at least two first areas on the virtual display screen, and the display device 800 may further include:
an adjusting module configured to adjust, according to a size of the first target element in the preset direction, a size of the second area located between the at least two first areas to arrange the first target element within the second area adjusted.

Optionally, the target image includes a second target element having a size larger than a size of the second area in the preset direction, and the rendering module is further configured to downsize, for each of the second target elements, an element part located within the second area in the second target element, in which the element part includes a part consisting of pixel points located within the second area among pixel points constituting the second target element.

Optionally, the rendering module is further configured to downsize the element part located within the second area according to a preset ratio, in which the preset ratio is smaller than or equal to a ratio threshold, and the ratio threshold is a ratio of the size of the second area to the size of the second target element in the preset direction.

Optionally, the displaying module 802 is further configured to, for each of the display areas, determine a mask image of an edge area of the display area, perform a superposition processing on a first image part and the mask image to obtain a second image part, generate a third sub-image corresponding to the display area according to the second image part and a third image part, and display the third sub-image in the display area, in which the first image part is an image part located in the edge area among the sub-images corresponding to the display area, and the third image part is an image part not located in the edge area among the sub-images corresponding to the display area.

Optionally, the displaying module 802 is further configured to perform a blur processing on a fourth image part to obtain a fifth image part, in which the fourth image part is an image part located in a first edge area among the sub-images corresponding to the display area, and the first edge area is an edge area at a side adjacent to the first spacing in the display area; and
generate the third sub-image corresponding to the display area according to the second image part, the third image part, the fifth image part and the sixth image part, in which the sixth image part is an image part not located in the first edge area among the sub-images corresponding to the display area.

Optionally, the displaying module 802 is further configured to, for each of the display areas, perform a blur processing on a fourth image part to obtain a fifth image part, generate a fourth sub-image corresponding to the display area according to a fifth image part and a sixth image part, and display the fourth sub-image in the display area, in which the fourth image part is an image part located in a first edge area among the sub-images corresponding to the display area, the sixth image part is an image part not located in the first edge area among the sub-images corresponding to the display area, and the first edge area is an edge area at a side adjacent to the first spacing in the display area.

With respect to the devices in the above embodiments, the specific manners for performing operations for individual modules of the devices have been described in detail in the embodiments regarding the methods, which will not be elaborated herein.

The present invention further provides a computer-readable storage medium having a computer program stored thereon, in which the computer program, when executed by a processor, implements the steps of the display method provided by the present invention.

The present invention further provides an electronic device, including:
a processor; and
a memory for storing processor-executable instructions;
in which the processor is configured to execute the executable instructions to cause the electronic device to implement the steps of the display method provided by the present invention.

For example, the electronic device may be a mobile terminal or a vehicle.

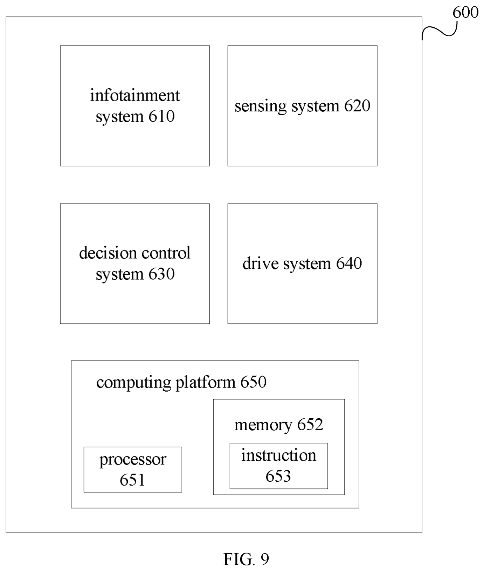

FIG. 9 is a block diagram illustrating a vehicle according to an exemplary embodiment. For example, the vehicle 600 may be a hybrid vehicle, a non-hybrid vehicle, an electric vehicle, a fuel cell vehicle or other types of vehicles. The vehicle 600 may be an autonomous vehicle, a semi-autonomous vehicle or a non-autonomous vehicle.

Referring to FIG. 9, the vehicle 600 may include various subsystems, such as an infotainment system 610, a sensing system 620, a decision control system 630, a drive system 640, and a computing platform 650. The vehicle 600 may further include more or less subsystems, and each subsystem may include multiple components. In addition, each subsystem and each component of the vehicle 600 may be interconnected by wired or wireless means.

In some embodiments, the infotainment system 610 may include a communication system, an entertainment system, a navigation system and the like.

The sensing system 620 may include several sensors for sensing information of the environment around the vehicle 600. For example, the sensing system 620 may include a global positioning system (the global positioning system may be a GPS system, a Beidou system or other positioning systems), an inertial measurement unit (IMU), a lidar, a millimeter-wave radar, an ultrasonic radar and a camera.

The decision control system 630 may include a computing system, a vehicle controller, a steering system, a throttle and a braking system.

The drive system 640 may include components that provide power movement for the vehicle 600. In an embodiment, the drive system 640 may include an engine, an energy source, a transmission system and wheels. The engine may be one or a combination of internal combustion engine, electric motor and air compression engine. The engine may convert the energy provided by the energy source into mechanical energy.

Some or all functions of the vehicle 600 are controlled by the computing platform 650. The computing platform 650 may include at least one processor 651 and a memory 652, and the processor 651 may execute instructions 653 stored in the memory 652.

The processor 651 may be any conventional processor, such as a commercially available CPU. The processor may also include, for example, a graphic process unit (GPU), a field programmable gate array (FPGA), a system on chip (SOC), an application specific integrated circuit (ASIC) or a combination of these components.

The memory 652 may be implemented using any type of volatile or non-volatile memory devices, or a combination of these components, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

In addition to the instructions 653, the memory 652 may further store data, such as a road map, route information, a position, a direction and a velocity of the vehicle and other data. The data stored in the memory 652 may be used by the computing platform 650.

In embodiments of the present invention, the processor 651 may execute the instructions 653 to complete all or some of the steps of the above display method.

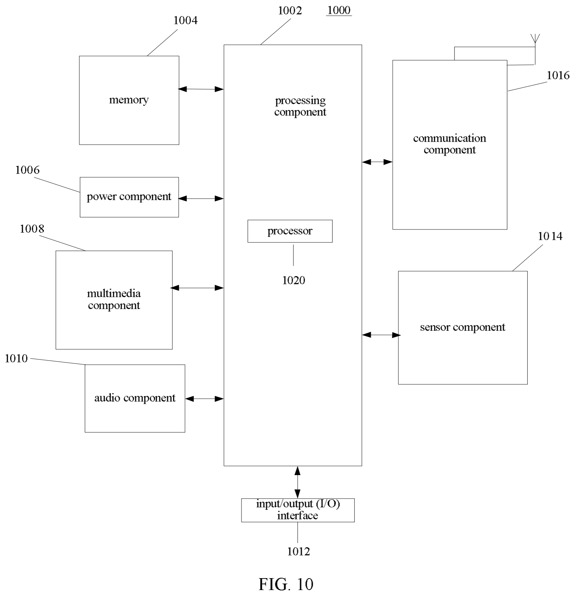

FIG. 10 is a block diagram illustrating a mobile terminal according to an exemplary embodiment. For example, the mobile terminal 1000 may be a mobile phone, a computer, a digital broadcast terminal, a messaging device, a game console, a tablet device, a medical device, an exercise device, a personal digital assistant, and so on.

Referring to FIG. 10, the mobile terminal 1000 may include one or more of: a processing component 1002, a memory 1004, a power component 1006, a multimedia component 1008, an audio component 1010, an input/output (I/O) interface 1012, a sensor component 1014, and a communication component 1016.

The processing component 1002 normally controls the overall operation (such as operations associated with displaying, telephone calls, data communications, camera operations and recording operations) of the mobile terminal 1000. The processing component 1002 may include one or a plurality of processors 1020 to execute instructions so as to perform all or part of the steps of the above method for detecting the key points of the human skeleton according to embodiments of the present invention. In addition, the processing component 1002 may include one or a plurality of units to facilitate interactions between the processing component 1002 and other components. For example, the processing component 1002 may include a multimedia unit to facilitate interactions between the multimedia component 1008 and the processing component 1002.

The memory 1004 is configured to store various types of data to support operations at the mobile terminal 1000. Examples of such data include instructions for any application or method operated on the mobile terminal 1000, contact data, phone book data, messages, images, videos and the like. The memory 1004 may be realized by any type of volatile or non-volatile storage devices, or a combination of these components, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a disk or an optical disk.

The power component 1006 provides power to various components of the mobile terminal 1000. The power component 1006 may include a power management system, one or more power sources and other components associated with power generation, management, and distribution of the mobile terminal 1000.

The multimedia component 1008 includes a screen that provides an output interface between the mobile terminal 1000 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, slides, and gestures on the touch panel. The touch sensor may sense not only the boundary of the touches or sliding actions, but also the duration and pressure related to the touches or sliding operations. In some embodiments, the multimedia component 1008 includes a front camera and/or a rear camera. When the mobile terminal 1000 is in an operation mode such as a shooting mode or a video mode, the front camera and/or the rear camera may receive external multimedia data. Each front camera and rear camera may be a fixed optical lens system or have a focal length and an optical zoom capability.

The audio component 1010 is configured to output and/or input an audio signal. For example, the audio component 1010 includes a microphone (MIC) that is configured to receive an external audio signal when the mobile terminal 1000 is in an operation mode such as a call mode, a recording mode, and a voice recognition mode. The received audio signal may be further stored in the memory 1004 or transmitted via the communication component 1016. In some embodiments, the audio component 1010 also includes a speaker for outputting audio signals.

The I/O interface 1012 provides an interface between the processing component 1002 and a peripheral interface unit. The peripheral interface unit may be a keyboard, a click wheel, a button and so on. These buttons may include, but are not limited to, a home button, a volume button, a start button, and a locking button.

The sensor component 1014 includes one or more sensors for providing the mobile terminal 1000 with various aspects of status assessments. For example, the sensor component 1014 may detect an ON/OFF state of the mobile terminal 1000 and a relative positioning of the components. For example, the components may be a display and a keypad of the mobile terminal 1000. The sensor component 1014 may also detect a change in position of the mobile terminal 1000 or a component of the mobile terminal 1000, the presence or absence of contact of the user with the mobile terminal 1000, the orientation or acceleration/deceleration of the mobile terminal 1000 and a temperature change of the mobile terminal 1000. The sensor component 1014 may include a proximity sensor configured to detect the presence of nearby objects without any physical contact. The sensor component 1014 may also include a light sensor (such as a CMOS or a CCD image sensor) for use in imaging applications. In some embodiments, the sensor component 1014 may also include an acceleration sensor, a gyro sensor, a magnetic sensor, a pressure sensor, or a temperature sensor.

The communication component 1016 is configured to facilitate wired or wireless communication between the mobile terminal 1000 and other devices. The mobile terminal 1000 may access a wireless network based on a communication standard such as 2G, 3G, 4G, 5G or a combination of 2G, 3G, 4G, and 5G. In an exemplary embodiment, the communication component 1016 receives broadcast signals or broadcast-associated information from an external broadcast management system via a broadcast channel. In an exemplary embodiment, the communication component 1016 also includes a near field communication (NFC) module to facilitate short range communication. For example, the NFC module may be implemented based on radio frequency identification (RFID) technology, infrared data association (IrDA) technology, ultra-wide band (UWB) technology, Bluetooth (BT) technology and other technologies.

In an exemplary embodiment, the mobile terminal 1000 may be implemented by one or more application specific integrated circuits (ASICs), digital signal processors (DSPs), digital signal processing devices (DSPDs), programmable logic devices (PLDs), field programmable gate arrays (FPGA), controllers, microcontrollers, microprocessors, or other electronic components, for performing the above-described methods.

In illustrative embodiments, there is also provided a non-transitory computer-readable storage medium including instructions, such as included in the memory 1004, executable by the processor 1020 in the mobile terminal 1000, for performing the above-described methods. For example, the non-transitory computer-readable storage medium may be a ROM, a RAM, a CD-ROM, a magnetic tape, a floppy disc, an optical data storage device, and the like.

In another illustrative embodiment, there is also provided a computer program product, which includes a computer program executable by a programmable device, the computer program having a code portion for executing the above display method when executed by the programmable device.

Furthermore, the term "illustrative" used in the present invention serves as an example, instance, and diagram. Any aspect or design described in the present invention as "illustrative" is not necessarily to be understood as advantageous over other aspects or designs. On the contrary, the use of the term "illustrative" is intended to present concepts in a concrete way. As used in the present invention, the term "or" is intended to mean an inclusive "or" rather than an exclusive "or". That is, unless otherwise specified or clear from the context, "X applying A or B" is intended to mean any one of the natural inclusive arrangements. That is, if X applies A; X applies B; or X applies both A and B, "X applying A or B" is satisfied in any of the foregoing examples. In addition, the articles "a" and "an" as used in the present invention and the appended claims are generally understood to mean "one or more" unless otherwise specified or clearly pointed to in the singular from the context.

Likewise, although the present invention has been shown and described with respect to one or more implementations, equivalent variations and modifications will occur to those skilled in the art after reading and understanding the specification and drawings. The present invention includes all such modifications and variations, and is limited by the scope of the claims. With particular reference to various functions performed by the above-described components (e.g., elements, resources, etc.), unless otherwise indicated, the terms used to describe such components are intended to correspond to any component (functionally equivalent) that performs the specified function of the described component, even if it is not structurally equivalent to the disclosed structure. In addition, although a specific feature of the present invention may have been disclosed with respect to one of several implementations, such feature may be combined with one or more other features of other implementations as may be desirable and advantageous for any given or specific application. Furthermore, such terms are intended to be inclusive in a manner similar to the term "including" in terms of "including", "having", "having" or variations of these terms used in the detailed description or claims.

Other embodiments of the present invention will be apparent to those skilled in the art from consideration of the specification and practice of the present invention disclosed here. This application is intended to cover any variations, uses, or adaptations of the present invention following the general principles of the present invention and including such departures from the present invention as come within known or customary practice in the art. invention

It will be appreciated that the present invention is not limited to the exact construction that has been described above and illustrated in the accompanying drawings. It is intended that the scope of the present invention be limited by the appended claims.

In the foregoing detailed description, reference is made to the accompanying drawings, and in which is shown by way of illustration specific aspects in which the present invention may be practiced. In this regard, relative terms such as "central", "longitudinal", "lateral", "length", "width", "thickness", "up", "down", "front", "rear", "right", "left", "vertical", "horizontal", "top", "bottom", "inner", "outer", "clockwise", "counterclockwise", "axial", "radial", "circumferential" may be construed to refer to the orientation as then described or as shown in the drawings under discussion. Since components of the described device may be positioned in a number of different orientations, the directional term may be used for illustrative purposes rather than limiting. It is to be understood that other aspects may be utilized and structural or logical changes may be made without departing from the concepts of the present invention. The follow detailed description is, therefore, not to be taken in a limit sense.

It is to be understood that features of various embodiments of the present invention described herein may be combined with each other unless otherwise specified. As used in the present invention, the term "and/or" includes any one of the related listed items and any combination of any two or more. Similarly, "at least one of ..." includes any one of the related listed items and any combination of any two or more.

It is to be understood that unless specified or limited otherwise, the terms "joint", "attachment", "mounted", "connected", "coupled", "fixed" and the like are used broadly, and may be, for example, fixed connections, detachable connections, or integral connections; may also be mechanical or electrical connections or communicated with each other; may also be direct connections or indirect connections via intervening structures; may also be inner communications of two elements, unless otherwise specified. For those skilled in the art, the specific meanings of the above terms in the present invention may be understood according to specific situations.

In addition, the term "above" used in reference to a component, element or material layer formed or located "above" a surface may be used in the present invention to mean that a component, element or material layer is "indirectly" located (e.g., placed, formed, deposited, etc.) on the surface such that one or more additional components, elements or layers are arranged between the surface and the component, element or material layer. However, the term "above" used in reference to a component, element or material layer formed or located "above" the surface may also optionally have a specific meaning: the component, element or material layer is "directly" located (e.g., placed, formed, deposited, etc.) on the surface, for example, in direct contact with the surface.

Although terms such as "first", "second" and "third" may be used in the present invention to describe various components, components, areas, layers or sections, these components, components, areas, layers or sections are not limited by these terms. On the contrary, these terms are used to distinguish one component, component, area, layer or section from another component, component, area, layer or section. Therefore, the first component, component, area, layer or section mentioned in the examples described herein may also be called the second component, component, area, layer or section without departing from the teaching of each example. In addition, terms such as "first" and "second" are used herein for purposes of description and are not intended to indicate or imply relative importance or significance or to imply the number of indicated technical features. Thus, the feature defined with "first" and "second" may include one or more of this feature. In the description of the present invention, "a plurality of" means two or more than two, unless specified otherwise.

It is to be understood that spatially relative terms such as "above", "below" and the like are used in the present invention to describe the relationship between one element shown in the figure and another. In addition to the orientations depicted in the drawings, such spatially relative terms are also intended to encompass different orientations of the device in use or operation. For example, if the device in the drawing is turned over, an element described as "above" with respect to another element will be "below" with respect to the other element. Therefore, according to the spatial orientation of the device, the term "above" includes both upper and lower orientations. The device may have other orientations (e.g., rotated 90 degrees or in other orientations), and the spatial relative terms used in the present invention may be interpreted accordingly.

## Claims

1. A display method, comprising:
obtaining (S21) an instruction for displaying a target image spanning at least two display areas (202; 203; 204) with a first spacing (205; 206) between the at least two display areas (202; 203; 204); and
displaying (S22) respectively at least two sub-images of the target image that correspond to locations of the at least two display areas (202; 203; 204) on the at least two display areas (202; 203; 204), wherein the at least two sub-images do not overlap in the target image, and a second spacing corresponding to the first spacing (205; 206) exists between the at least two sub-images.

2. The method according to claim 1, wherein a display area among the at least two display areas (202; 203; 204) comprises a display area of a physical screen.

3. The method according to claim 1, wherein a display area among the at least two display areas (202; 203; 204) comprises a display area formed by a projection onto a front windshield (201) of a vehicle performed by a projection device;
optionally, wherein the at least two display areas (202; 203; 204) are arranged horizontally.

4. The method according to claim 1, further comprising:
obtaining an image data of the target image;
rendering, according to the image data, the target image on a virtual display screen (301), wherein the virtual display screen (301) comprises at least two first areas (302; 303; 304) and a second area (305; 306) located between the at least two display areas (202; 203; 204), the at least two first areas (302; 303; 304) are in a one-to-one correspondence to the at least two display areas (202; 203; 204), and the second area (305; 306) corresponds to the first spacing (205; 206);
dividing, according to size information of the at least two first areas (302; 303; 304) and the second area (305; 306), the target image into at least two first sub-images and at least one second sub-image, wherein the second sub-image is an image corresponding to the second spacing; and
wherein displaying (S22) respectively the at least two sub-images of the target image that correspond to the locations of the at least two display areas (202; 203; 204) on the at least two display areas (202; 203; 204) comprises:
displaying the at least two first sub-images on the at least two display areas (202; 203; 204).

5. The method according to claim 4, wherein displaying the at least two first sub-images on the at least two display areas (202; 203; 204) comprises:
displaying, for a first area among the at least two first areas (302; 303; 304), the first sub-image on the first area on a display area corresponding to the first area.

6. The method according to claim 4, wherein the second area (305; 306) has a size the same as a size of the first spacing (205; 206).

7. The method according to claim 4, wherein the at least two display areas (202; 203; 204) are arranged along a preset direction, and the at least two first areas (302; 303; 304) are arranged in the same manner as the at least two display areas (202; 203; 204) on the virtual display screen (301).

8. The method according to claim 7, wherein the target image comprises a first target element spanning the at least two first areas (302; 303; 304) on the virtual display screen (301), and the method further comprises:
adjusting, according to a size of the first target element in the preset direction, a size of the second area (305; 306) located between the at least two first areas (302; 303; 304) to arrange the first target element within the second area (305; 306) adjusted.

9. The method according to claim 7, wherein the target image comprises a second target element having a size larger than a size of the second area (305; 306) in the preset direction, and rendering, according to the image data, the target image on the virtual display screen (301) pre-constructed comprises:
downsizing, for a second target element, an element part located within the second area (305; 306) in the second target element, wherein the element part comprises a part consisting of pixel points located within the second area (305; 306) among pixel points constituting the second target element;
optionally, wherein downsizing the element part located within the second area (305; 306) comprises:
downsizing the element part located within the second area (305; 306) according to a preset ratio, wherein the preset ratio is smaller than or equal to a ratio threshold, and the ratio threshold is a ratio of the size of the second area (305; 306) to the size of the second target element in the preset direction.

10. The method according to any one of claims 1 to 9, wherein displaying (S22) respectively the at least two sub-images of the target image that correspond to the locations of the at least two display areas (202; 203; 204) on the at least two display areas (202; 203; 204) comprises:
for a display area among the at least two display areas (202; 203; 204), determining a mask image of an edge area of the display area, performing a superposition processing on a first image part and the mask image to obtain a second image part, generating a third sub-image corresponding to the display area according to the second image part and a third image part, and displaying the third sub-image in the display area, wherein the first image part is an image part located in the edge area among the sub-images corresponding to the display area, and the third image part is an image part not located in the edge area among the sub-images corresponding to the display area.

11. The method according to claim 10, wherein displaying (S22) respectively the at least two sub-images of the target image that correspond to the locations of the at least two display areas (202; 203; 204) on the at least two display areas (202; 203; 204) further comprises:
performing a blur processing on a fourth image part to obtain a fifth image part, wherein the fourth image part is an image part located in a first edge area among the sub-images corresponding to the display area, and the first edge area is an edge area at a side adjacent to the first spacing (205; 206) in the display area; and
generating the third sub-image corresponding to the display area according to the second image part and the third image part comprises:
generating the third sub-image corresponding to the display area according to the second image part, the third image part, the fifth image part and a sixth image part, wherein the sixth image part is an image part not located in the first edge area among the sub-images corresponding to the display area.

12. The method according to any one of claims 1 to 9, wherein respectively displaying (S22) the at least two sub-images of the target image that correspond to the locations of the at least two display areas (202; 203; 204) on the at least two display areas (202; 203; 204) further comprises:
for a display area among the at least two display areas (202; 203; 204), performing a blur processing on a fourth image part to obtain a fifth image part, generating a fourth sub-image corresponding to the display area according to a fifth image part and a sixth image part, and displaying the fourth sub-image in the display area, wherein the fourth image part is an image part located in a first edge area among the sub-images corresponding to the display area, the sixth image part is an image part not located in the first edge area among the sub-images corresponding to the display area, and the first edge area is an edge area at a side adjacent to the first spacing (205; 206) in the display area.

13. A display device (800), comprising:
a first obtaining module (801) configured to obtain an instruction for displaying a target image spanning at least two display areas (202; 203; 204) with a first spacing between the at least two display areas (202; 203; 204); and
a displaying module (802) configured to display respectively at least two sub-images of the target image that correspond to locations of the at least two display areas (202; 203; 204) on the at least two display areas (202; 203; 204), wherein the at least two sub-images do not overlap in the target image, and a second spacing corresponding to the first spacing exists between the at least two sub-images.

14. A computer-readable storage medium having a computer program stored thereon, wherein the computer program, when executed by a processor, implements the display method according to any one of claims 1 to 12.

15. A computer program product comprising a computer program, wherein the computer program, when executed by a processor, implements the display method according to any one of claims 1 to 12.
